Europäisches Patentamt

European Patent Office

Office européen des brevets

(19)

(11) Numéro de publication: **0 091 703**
**B1**

(12) **FASCICULE DE BREVET EUROPEEN**

(45) Date de publication du fascicule du brevet: **20.11.86**

(51) Int. Cl.⁴: **F 16 K 11/06, F 16 K 27/04**

(21) Numéro de dépôt: **83200389.1**

(22) Date de dépôt: **22.03.83**

(54) Robinet mélangeur à cartouche avec plaques en matériau dur.

(30) Priorité: **09.04.82 IT 6747482**

(43) Date de publication de la demande:
**19.10.83 Bulletin 83/42**

(45) Mention de la délivrance du brevet:
**20.11.86 Bulletin 86/47**

(84) Etats contractants désignés:
**DE FR GB SE**

(56) Documents cités:
**EP-A-0 021 029**
**FR-A- 594 302**
**FR-A-2 250 948**
**FR-A-2 475 680**

(73) Titulaire: **GEVIPI A.G.**
**Aeulestrasse 5 Postfach 83 Triesen**
**FL-9490 Vaduz (LI)**

(72) Inventeur: **Knapp, Alfons, Dr.**
**Bleicherstrasse 3**
**Biberach/Riss (DE)**

(74) Mandataire: **Patrito, Pier Franco, Dr. Ing.**
**Cabinet PATRITO BREVETTI Via Don Minzoni 14**
**I-10121 Torino (IT)**

Courier Press, Leamington Spa, England.

## Description

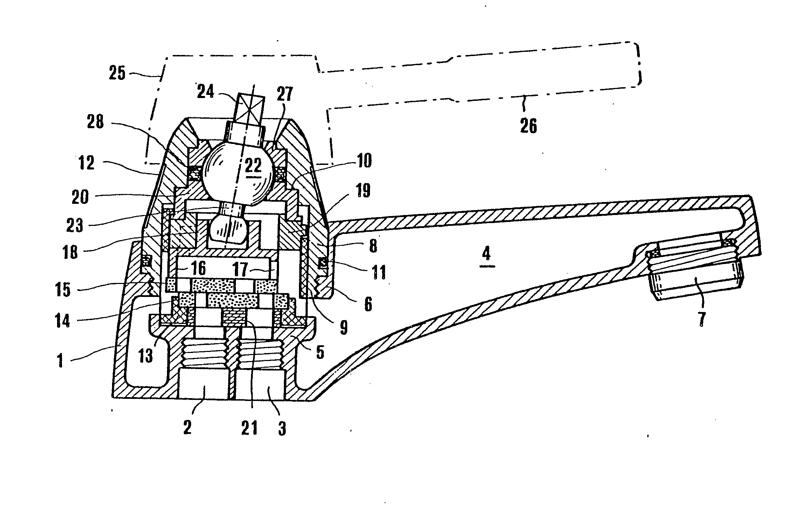

La présente invention a pour objet un robinet mélangeur avec un corps, avec une cartouche formée par une enveloppe renfermant des organes de contrôle du flux constitués par des plaques en matériau dur et des organes pour commander les déplacements desdites plaques en matériau dur, et avec un couvercle creux appliqué de manière démontable par l'une de ses extrémités au corps du robinet en faisant saillie par rapport audit corps et en recouvrant la cartouche de sorte que celle-ci se trouve pour une partie importante de son extension à l'intérieur dudit couvercle. Voir pour ex. FR—A—2.250.948, figure 1.

Dans la plupart des robinets mélangeurs connus, la cartouche est introduite par toute ou presque toute son extension dans le corps du robinet, et elle est retenue par un couvercle substantiellement plat appliqué au corps. Le corps du robinet est habituellement métallique, tandis que l'enveloppe de la cartouche, et au moins une partie des organes de commande qu'elle renferme, sont habituellement en matière plastique; ces matériaux présentent des coefficients de dilatation thermique remarquablement différents. Par conséquent, quand le robinet est réglé pour le débit d'eau chaude, l'eau chauffe la cartouche et le corps du robinet, et la cartouche se dilate plus que le corps du robinet. La différence de dilatation est partiellement absorbée par une garniture en caoutchouc disposée entre le corps du robinet et la plaque fixe en matériau dur de la cartouche. Cette garniture en caoutchouc évite le blocage du robinet dans de telles conditions, mais elle n'est pas capable d'éviter qu'il se vérifie une forte variation de la résistance opposée par le robinet à son réglage, résistance qui, si elle avait été établie à l'avance à une valeur normale à froid, devient excessive à chaud. En outre, la prévision de ces phénomènes de dilatation thermique oblige à fixer des amples jeux de montage entre la cartouche et le corps du robinet, de sorte que l'usager remarque des jeux correspondants des organes de manoeuvre du robinet, jeux qui troublent la manoeuvre et en outre gênent un réglage soigneux.

Le FR—A—2250948 montre un robinet ayant un couvercle creux appliqué de manière démontable par l'une de ses extrémités au corps du robinet en faisant saillie par rapport audit corps et en recouvrant la cartouche de sorte que celle-ci se trouve pour une partie importante de son extension à l'intérieur dudit couvercle. Toutefois, ce couvercle ne prend aucune partie active aux phénomènes de dilatation thermique de l'ensemble du robinet, et il n'est donc pas en condition de remédier aux inconvénients signalés.

Le but de la présente invention est celui d'éliminer ou de réduire les inconvénients des robinets mélangeurs à cartouche connus, en prévenant au moins les plus grandes variations de la résistance opposée par le robinet à l'action de réglage à des températures différentes et en autorisant des dimensions plus réduites des jeux de montage de la cartouche dans le corps du robinet.

Selon l'invention, cet but est atteint par un robinet du type indiqué dans le préambule, caractérisé en ce que la cartouche est maintenue dans le corps du robinet par serrage entre une base dans le corps du robinet et un épaulement du couvercle; et ence que les matériaux qui constituent, d'un côté, les organes de la cartouche interposés entre les plaques en matériau dur et ledit épaulement du couvercle, et d'autre côté le couvercle lui-même, ont des coefficients de dilatation thermique proches l'un de l'autre.

Grâce à ces caractéristiques, la pression exercée par la cartouche sur la correspondante garniture en caoutchouc est substantiellement indépendante de la dilatation thermique du corps du robinet, et elle dépende au contraire essentiellement de la différence de dilatation entre la cartouche et le couvercle, qui est transformé est un organe prenant partie active à la dilatation thermique de l'ensemble du robinet. Cette différence de dilatation peut être rendue très petite par le choix de matériaux ayant des coefficients de dilatation thermique proches l'un de l'autre, pour la construction de la cartouche et de l'organe à manchon, et au fait que lesdites parties prennent des températures proches puisque la cartouche est placée dans la cavité de couvercle. Il s'ensuit que la compression de la garniture en caoutchouc de la cartouche, telle qu'elle a été fixée lors de l'installation, ne change pas ou change très peu dans les différentes conditions de fonctionnement du robinet, et ne donne pas origine à d'appréciables différences de la résistance opposée aux organes de manoeuvre du robinet. En outre, puisque les différences de dilatation thermique entre la cartouche et le couvercle dans lequel elle est placée doivent être prévues très réduites, on peut établir à l'avance des jeux de montage très petits, qui donnent lieu à des jeux autant petits des organes de manoeuvre du robinet, en évitant ainsi soit les difficultés au réglage fin, soit la désagréable impression que ces jeux produisent.

Etant déjà connue l'opportunité de fabrique en matière plastique au moins une partie des organes renfermés dans la cartouche, l'exigence posée par l'invention, que les coefficients de dilatation thermique des matériaux qui constituents les organes importants de la cartouche et le couvercle soient proches l'un de l'autre, peut être satisfaite de manière convenable en fabriquant en matières plastiques soit lesdits organes renfermés dans la cartouche que le couvercle. En outre, il est préferable que l'envelope de la cartouche soit elle ainsi fabriquée en matière plastique.

Préférablement, le corps du robinet présente une hauteur réduite et ledit couvercle est appliqué au corps de manière qu'il fasse saillie de lui pour une partie importante de son extension. Cela permet de réduire la consommation de matériau métallique nécessaire pour le corps et de lui donner une forme simple qui en facilite la fabrication et particulièrement la lustrage sur des machines automatiques.

Quand on adopte la caractéristique susdite, il est avantageux que le couvercle soit vissé dans le corps du robinet et qu'il présente sur sa surface extérieure des rayures en saillie. Ainsi faisant, le vissage et le dévissage du couvercle par rapport au corps du robinet peuvent être faits à la main sans employer aucun outil. Dans les cas où le couvercle n'est pas couvert par le capuchon qui normalement fait partie des organes de manoeuvre du robinet, il peut être vissé et dévissé pour l'accès à la cartouche sans même devoir démonter au préalable les parties extérieures des organes de manoeuvre.

L'adoption des susdites caractéristiques autorise aussi des solutions esthétiques originales et estimables.

Enfin, quand le couvercle est fabriqué en matière plastique et les organes de manoeuvre du robinet sont du type à levier avec articulation sphérique, le couvercle peut même former d'une seule pièce la partie supérieure du coussinet où est logée l'articulation sphérique des organes de manoeuvre, en évitant ainsi la fabrication de ce coussinet comme un composant séparé qui doit être ajouté au moment du montage.

Celles-ci et d'autres caractéristiques et avantages de l'objet de l'invention résulteront plus clairement de la suivante description d'une forme de réalisation, donnée à titre d'exemple non limitatif, et schématiquement représentée en section verticale dans la figure unique du dessin annexé.

Le corps 1 du robinet, généralement métallique, présente des raccords 2 et 3 pour l'arrivée de l'eau chaude et froide et, dans cet exemple, il est prolongé pour former un bec de débit 4 muni d'aérateur 7; cette construction est appropriée, par exemple, pour un lavabo. En correspondance des raccords 2 et 3, le corps 1 forme une base d'ppui 5 pour la cartouche et au dessus de cette base il présente une ouverture filetée 6 pour le couvercle. Puisqu il ne doit pas présenter une hauteur suffisante pour contenir toute la cartouche, le corps 1 peut être bas et d'une forme simple, il demande peu de matériau et il est de fabrication facile; ses surfaces extérieures de forme simple peuvent être lustrées sans difficultés sur des machines automatiques.

Dans l'ouverture filetée 6 du corps 1 est vissée l'extrémité inférieure filetée 9 d'un couvercle 8 en forme de manchon, fabriqué en matière plastique. Sa cavité présente un épaulement 10 pour l'appui supérieur de la cartouche du robinet. Le couvercle 8 fait étanchéité par rapport au corps 1 au moyen d'une garniture 11, et il est pourvu, sur sa surface extérieure, de rayures en saillie ou en creux 12, pour permettre d'effectuer à la main et sans outils son vissage et dévissage.

La cartouche du robinet présente une enveloppe à cage 13, en matière plastique, qui renferme la plaque fixe 14 en matériau céramique, sur laquelle est appuyée de manière mobile la plaque mobile 15, solidaire d'un coulisseau 16 dont la partie supérieure 18 est guidée pour se déplacer diamétralement dans un anneau tournant 19, tenu en position par un couvercle 20 de la cartouche, appliqué à l'enveloppe 13 et qui forme la partie inférieure du coussinet pour l'articulation sphérique des organes de commande. La cartouche est complétée par una garniture en caoutchouc ou similaire 21 au moyen de laquelle la cartouche s'appuie sur la base 5 du corps 1, et qui établir l'étanchéité entre les raccords d'arrivée 2 et 3 et les correspondantes ouvertures de passage présentées par la plaque fixe 14. Le couvercle 20 de la cartouche s'appuie supérieurement contre l'épaulement 10 du couvercle 8.

Les organes de manoeuvre du robinet comprennent une sphère d'articulation 22 disposée entre une partie inférieure de coussinet formée par le couvercle 20 de la cartouche, et une partie supérieure de coussinet 27 insérée dans le couvercle 8; une garniture 28 établit l'étanchéité entre la sphère 22 et le couvercle 8. De la sphère 22 sont solidaires: vers l'intérieur du robinet, une clavette 23 engagée dans la partie supérieure 18 du coulisseau 16 de manière à transmettre soit les déplacement dans la direction du diamètre, doit les rotations; et vers l'extérieur du robinet, un accouplement 24, par exemple prismatique, pour un levier de manoeuvre 26, éventuellement pourvu de capuchon 25 qui couvre partiellement l'organe à manchon 8 et protège l'articulation.

Comme on le comprendra et comme il est bien connu, les déplacements verticaux du levier 26 font déplacer diamétralement le coulisseau 16 et la plaque 15, pour régler le débit du robinet, tandis que les déplacements du levier 26 perpendiculaires au plan du dessin font tourner le coulisseau 16 avec la plaque 15 pour régler le rapport de mélange entre eau chaude et eau froide.

La cartouche 13 à 21 est serrée entre la base d'appui 5 et l'épaulement 10 avec une pression qui se transmet à travers la garniture en caoutchouc 21, la plaque fixe 14, la plaque mobile 15, le coulisseau 16, l'anneau 19 et le couvercle 20 de la cartouche, et cette pression se décharge à nouveau sur le corps 1 en correspondance de l'ouverture filetée 6, à travers le couvercle 8. On comprend bien que le choix de matériaux à dilatation thermique similaire pour les pieces 13, 16, 19, 20 et 8 a comme conséquence que, pendant les variations de température, la pression sur la garniture 21 peut varier très peut, en réalisant ainsi les avantages déjà énoncés.

Comme conséquence, les jeux de montage de la cartouche dans l'organe à manchon, soit en direction radiale qu'en direction longitudinale, peuvent être réduits à un minimum, en assurant ainsi le comportement le plus favorable de l'ensemble.

Quoique la partie supérieure du coussinet 27 pour l'articulation sphérique 22 soit représentée comme séparée du couvercle 8, il est bien clair qu'elle peut constituer une partie du couvercle 8 même quand ce dernier est réalisé en matière plastique appropriée, en simplifiant ainsi la fabrication et le montage du robinet.

Quoique le couvercle a été illustré comme directement vissé dans le corps du robinet, on comprendra qu'il pourrait aussi être fixé d'une autre façon, par exemple au moyen d'une douille.

## Revendications

1. Robinet mélangeur avec un corps (1), avec une cartouche (13—21) formée par une enveloppe (13) renfermant des organes de contrôle du flux constitués par des plaques (14, 15) en matériau dur et des organes (16—19) pour commander les déplacements desdites plaques en matériau dur, et avec un couvercle creux (8) appliqué de manière démontable par l'une (9) de ses extrémités au corps (1) du robinet en faisant saillie par rapport audit corps et en recouvrant la cartouche (13—21) de sorte que celle-ci se trouve pour une partie importante de son extension à l'intérieur dudit couvercle (8), caractérisé en ce que la cartouche (13—21) est maintenue dans le corps (1) du robinet par serrage entre une base (5) dans le corps du robinet et un épaulement (10) du couvercle (8); et en ce que les matériau qui constituent, d'un côté, les organes (16—20) de la cartouche interposés entre les plaques (14, 15) en matériau dur et ledit épaulement (10) du couvercle, et d'autre côté le couvercle (8) lui-même, ont des coefficients de dilatation thermique proches l'un de l'autre.

2. Robinet mélangeur selon la revendication 1, caractérisé en ce que lesdits organes (16—20) renfermés dans la cartouche (13—21) et ledit couvercle (8) sont fabriqués en matières plastiques.

3. Robinet mélangeur selon la revendication 2, caractérisé en ce que l'enveloppe (13) de la cartouche est elle aussi fabriquée en matière plastique.

4. Robinet mélangeur selon la revendication 1, caractérisé en ce que ledit couvercle (8) est vissé dans le corps (1) du robinet et présente sur sa surface externe des rayures (12) en saillie ou en creux.

5. Robinet mélangeur selon la revendication 2, comprenant des organes de manoeuvre à levier (22—24) avec articulation sphérique (22), caractérisé en ce que ledit couvercle (8) forme d'une seule pièce la partie supérieure (27) du coussinet (20, 27) où est logée l'articulation sphérique (22) des organes de manoeuvre (22—24).

## Patentansprüche

1. Mischventil mit einem Körper (1), mit einer Patrone (13—21), die als eine, aus Hartmaterial-scheiben (14, 15) bestehende Flussteurungs-glieder und zur Steuerung der Verschiebungen der Hartmaterialscheiben dienende Glieder (16—19) einschliessende Umhüllung (13) ausgebildet ist, und mit einem hohlen Deckel (8), der mittels eines (9) seiner Enden am Körper (1) des Mischventils abnehmbar angebracht ist, wobie er bezüglich des Körpers (1) vorragt und die Patrone (13—21) derart abdeckt, dass diese sich zu einem wesentlichen Teil ihrer Erstreckung innherhalb des Deckels (8) liegt, dadurch gekennzeichnet, dass die Patrone (13—21) im Körper (1) des Ventils durch Klemmung zwischen einem im Ventilkörper vorgesehenen Stützfuss (5) und einer Schulter (10) des Deckels (8) festgehalten wird, und dass die Materialien aus denen, einerseits, die zwischen den Hartmaterialscheiben (14, 15) und der Schulter (10) des Deckels angeordnete Glieder (16—20) der Patrone und, andererseits, der Deckel (8) selbst hergestellt sind, nahe aneinander liegende Wärmeausdehnungskoeffiziente aufweisen.

2. Mischventil nach Ansprüch 1, dadurch gekennzeichnet, dass die in der Patrone (13—21) eingeschlossene Glieder (16—20) und der Deckel (8) aus Kunststoff hergestellt sind.

3. Mischventil nach Anspruch 2, dadurch gekennzeichnet, dass die Umhüllung (13) der Patrone ebenfalls aus Kunststoff hergestellt ist.

4. Mischventil nach Anspruch 1, dadurch gekennzeichnet, dass der Deckel (8) in den Körper (1) des Ventils eingeschraubt ist und auf seiner äusseren Oberfläche durch Vorsprünge oder Rillen gebildete Reifelungen (12) aufweist.

5. Mischventil nach Anspruch 2, welches hebelartige Steuerungsglieder (22—24) mit Kugelgelenk (22) umfasst, dadurch gekennzeichnet, dass der Deckel (8) einstückig den oberen Teil (27) des Lagers (20—27) bildet, wo sich das Kugelgelenk (22) der Steuerungsglieder (22—24) befindet.

## Claims

1. A mixer valve with a body (1), with a cartridge (13—21) formed by a casing (13) enclosing flow control means formed by hard material plaques (14, 15), and members (16—19) for controlling the displacement of said hard material plaques, and with a hollowed cover (8) detachably fixed by one (9) of its ends to the body (1) of the valve in such a manner as to project with respect to said body and to cover the cartridge (13—21) so that this latter is housed for a large portion of its extension in the interior of said cover (8), characterized in that the cartridge (13—21) is retained within the valve body (1) by being clamped between a base (5) in the valve body and a shoulder (10) of the cover (8); and that the materials forming, on one hand, the members (16—20) of the cartridge which are interposed between the hard material plaques (14, 15) and said shoulder (10) of the cover, and, on the other hand, the cover (8) itself, have coefficients of expansion proximate to one another.

2. A mixer valve according to Claim 1, characterized in that said members (16—20) enclosed within the cartridge (13—21) and said cover (8) are made of plastics.

3. A mixer valve according to Claim 2, characterized in that also the casing (13) of the cartridge is made of plastics.

4. A mixer valve according to Claim 1, characterized in that said cover (8) is screwed into the body (1) of the valve and it is provided on its outer surface with projecting or recessed scorings (12).

5. A mixer valve according to Claim 2, comprising lever control means (22—24) with a ball joint (22), characterized in that said cover (8) integrally forms the upper portion (27) of the bearing (20, 27) where the ball joint (22) of the control means (22—24) is located.